# EUROPÄISCHE PATENTSCHRIFT

(11) **EP 1 544 143 B1**
(45) Veröffentlichungstag und Bekanntmachung des Hinweises auf die Patenterteilung: **10.09.2008**
(21) Anmeldenummer: 04028743.5
(22) Anmeldetag: 03.12.2004
(51) Int. Cl.: B65H 27/00, B65H 45/00, F16C 3/02

(54) **Transportwelle für eine Falzmaschine**
Transport shaft for a folding machine
Arbre de transport pour une plieuse

(30) Priorität: 16.12.2003 DE 20319527 U
(43) Veröffentlichungstag der Anmeldung: 22.06.2005
(73) Patentinhaber: MASCHINENBAU OPPENWEILER BINDER GmbH & Co. KG, 71570 Oppenweiler (DE)
(72) Erfinder: Beck, Christoph, 71579 Spiegelberg (DE)
(74) Vertreter: Hano, Christian

(56) Entgegenhaltungen:
- EP-A- 1 344 622
- DE-U1- 20 307 169
- GB-A- 2 059 013
- PATENT ABSTRACTS OF JAPAN Bd. 012, Nr. 336 (M-739), 9. September 1988 (1988-09-09) & JP 63 098463 A (BRIDGESTONE CORP), 28. April 1988 (1988-04-28)
- PATENT ABSTRACTS OF JAPAN Bd. 1998, Nr. 01, 30. Januar 1998 (1998-01-30) & JP 09 249352 A (MITSUBISHI HEAVY IND LTD), 22. September 1997 (1997-09-22)

## Beschreibung

Die Erfindung betrifft eine Transportwelle für eine Falzmaschine nach dem Oberbegriff des Patentanspruchs 1, die insbesondere als Falzwalze oder Messerwelle ausgebildet ist.

Die derzeit verwendeten Falzwalzen und Messerwellen siehe z.B. DE 203 07 169 U weisen Wellenkörper auf, die aus Stahl hergestellt sind und daher ein relativ hohes Gewicht aufweisen. Hierdurch wird die Handhabung beim Ein- und Ausbau der Transportwellen in die Falzmaschine erschwert. Zusätzlich wird das Gesamtgewicht der Falzmaschine erhöht. Darüber hinaus ist die Durchbiegung der bekannten Transportwellen bei großen Arbeitsbreiten verhältnismäßig hoch, wodurch entlang der Länge der Transportwellen unterschiedliche Kräfte auf einen zu transportierenden Bogen wirken.

Aus der GB-A-2 059 013 ist eine Walze bekannt, die einen Wellenkörper aus Kohlenstofffaserkunststoff aufweist, der von einer Ummantelung aus elastischem Material umgeben ist.

In der JP-A-63 098463 ist eine Druckerwalze beschrieben, die ebenfalls einen Wellenkörper aus Kohlenstofffaserkunststoff aufweist, der von einer Ummantelung aus Gummi umgeben ist.

Die EP-A- 1 344 622 offenbart eine Walze für einen Drucker mit einem Wellenkörper aus Kohlenstofffaserkunststoff, auf dem mehrere Transportrollen aus Gummi durch Spritzguss aufgebracht sind.

In der JP-A-09 249352 anhand eines Fallarms einer Falzmaschine ist beschrieben, dass durch die Verwendung von Kohlenstofffasermaterial ein geringeres Gewicht und gleichzeitig eine höhere Festigkeit erreicht werden kann.

Der Erfindung liegt die Aufgabe zugrunde, mit konstruktiv einfachen Mitteln eine Transportwelle für eine Falzmaschine mit geringem Gewicht und geringer Durchbiegung zu schaffen.

Diese Aufgabe wird erfindungsgemäß durch eine Transportwelle mit den Merkmalen des Patentanspruchs 1 gelöst. Eine vorteilhafte Weiterbildung der erfindungsgemäßen Transportwelle ist Gegenstand des Patentanspruchs 2.

Durch die erfindungsgemäße Befestigung der Transportrollen an dem Wellenkörper wird eine Beschädigung des Wellenkörpers aus Kohlenstofffaserkunststoff bei der Befestigung der Transportrolle oder der Messeraufnahme zuverlässig vermieden.

Dadurch, dass der Wellenkörper aus Kohlenstofffaserkunststoff hergestellt ist, kann das Gewicht der Transportwelle um mehr als 80% reduziert werden, wobei die Durchbiegung der erfindungsgemäßen Transportwelle geringer ist, als bei einer Transportwelle aus Stahl. Um eine zusätzlich Gewichtseinsparung zu erreichen ist es bevorzugt, die Transportrollen aus Aluminium herzustellen.

Ein Ausführungsbeispiel der Erfindung wird anhand der Zeichnungen näher erläutert. Es zeigen:

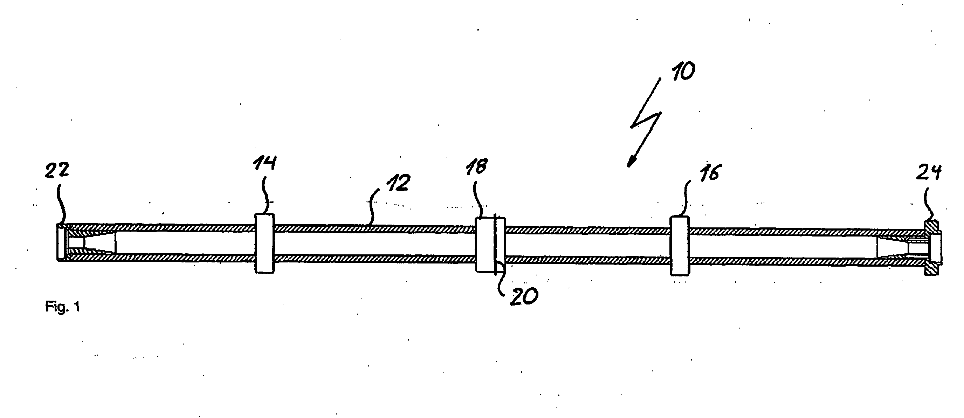

- Fig. 1: einen Längsschnitt durch eine Transportwelle,
- Fig. 2: eine Seitenansicht einer Transportwelle,
- Fig. 3: den Schnitt III-III von Fig. 2.

Die Transportwelle 10 weist einen länglichen Wellenkörper 12 mit ringförmigem Querschnitt auf, der aus Kohlenstofffaserkunststoff hergestellt ist. An den beiden Stirnseiten des Wellenkörpers 12 sind auf bekannte Weise Drehaufnahmen 22, 24 für eine drehbare Lagerung und einen Antrieb des Wellenkörpers 12 montiert.

Auf dem Wellenkörper 12 sind im Abstand zueinander zwei Transportrollen 14, 16 drehfest angebracht. In der Mitte zwischen den Transportrollen 14, 16 ist darüber hinaus eine ringförmige Messeraufnahme 18 drehfest an dem Wellenkörper 12 angebracht, an der ein Messer 20 beispielsweise zur Perforierung von Bogen aufgenommen ist.

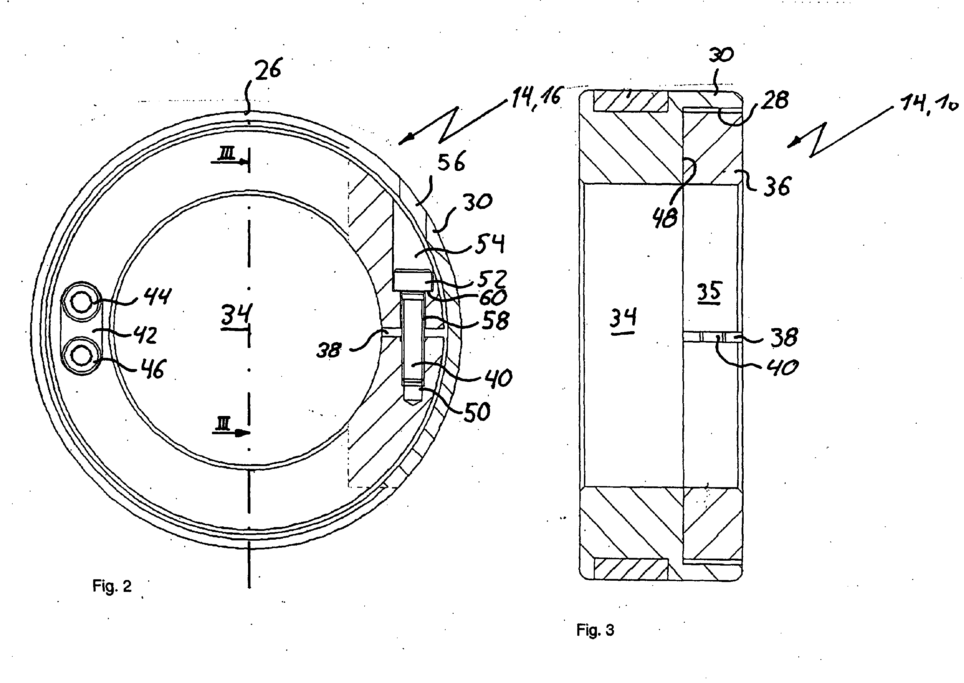

Wie es in den Fig. 2 und 3 zu erkennen ist, weisen die Transportrollen 14, 16 jeweils einen zylinderringförmigen Rollenkörper 26 auf, in dem koaxial eine zylindrische Innenausnehmung 34 ausgebildet ist, deren Innendurchmesser im Wesentlichen dem Außendurchmesser des Wellenkörpers 12 entspricht.

In der in Fig. 3 rechten Stirnseite ist in dem Rollenkörper 26 eine in die Innenausnehmung 34 übergehende zylindrische Innenausnehmung 28 koaxial ausgebildet, deren Durchmesser größer ist als der Durchmesser der Innenausnehmung 34. Die Innenausnehmung 28 wird radial durch eine Ringschulter 30 und axial durch eine Bodenfläche 48 begrenzt.

In die Innenausnehmung 28 ist ein zylinderringförmiger Klemmring 36 so eingesetzt, dass er auf der Bodenfläche 48 anliegt und seine von der Bodenfläche 48 abgewandte Stirnseite bündig zur Stirnseite des Rollenkörpers 26 verläuft. Der Außendurchmesser des Klemmrings 36 ist etwas kleiner als der Innendurchmesser der Innenausnehmung 28, wohingegen sein Innendurchmesser im wesentlichen dem Innendurchmesser der Innenausnehmung 34 entspricht. Der Klemmring 36 ist an einer Stelle durch einen Klemmspalt 38 unterbrochen, der in den Fig. 2 und 3 horizontal verläuft. Auf der dem Klemmspalt 38 diametral gegenüberliegenden Seite des Klemmrings 36 ist in der Stirnseite des Klemmrings 36 eine Ausnehmung 42 ausgebildet, in der zwei Schrauben 44, 46 angeordnet sind, die axial durch den Klemmring 36 hindurchgehen und jeweils in eine Gewindebohrung (nicht gezeigt) in der Bodenfläche 48 eingreifen, wodurch der Klemmring 36 axial an dem Rollenkörper 26 befestigt wird. Oberhalb des Klemmspalts 38 ist in dem Klemmring 36 eine in die Außenseite des Klemmrings 36 mündende Vertikalbohrung 54 ausgebildet, an die zum Klemmspalt 38 hin eine Bohrung 58 anschließt, deren Innendurchmesser geringer ist, als der Innendurchmesser der Bohrung 54, wodurch eine Schulter 60 gebildet wird. Der Bohrung 58 gegenüberliegend ist in dem Klemmring 36 eine Gewindebohrung 50 ausgebildet. Eine Klemmschraube 40 geht durch die Bohrung 58 hindurch und steht mit der Gewindebohrung 50 in Gewindeeingriff, wobei der Kopf 52 der Klemmschraube 40 an der Schulter 60 anliegt. Durch Drehen der Gewindeschraube 40 kann die Breite des Klemmspaltes 38 eingestellt und somit der Klemmring 36 auf dem Wellenkörper 12 durch Klemmsitz befestigt werden. Der Kopf 52 der Klemmschraube 40 ist von außen durch eine in der Ringschulter 30 vorgesehene Durchgangsöffnung 56 zugänglich, die mit der Bohrung 54 fluchtet.

Zur Befestigung der Transportrolle 14 bzw. 16 wird der Rollenkörper 26 auf den Wellenkörper 12 aufgeschoben. Anschließend wird an einer gewünschten Position die Klemmschraube 40 angezogen, weshalb der Klemmring 36 eine Klemmkraft auf den auf dem Wellenkörper 12 ausübt, wodurch die Transportrolle 14 bzw. 16 drehfest auf dem Wellenkörper 12 befestigt wird.

Die Messeraufnahme 18 kann ebenfalls einen Rollenkörper 26 aufweisen, wie er in Fig. 2 und 3 gezeigt ist, wobei an der Außenseite des Rollenkörpers 26 Mittel zur Aufnahme von Messern vorzusehen sind.

Um eine zusätzlich Gewichtseinsparung zu erreichen ist es bevorzugt, die Transportrollen 14, 16 sowie die Messeraufnahmen 18 aus Aluminium herzustellen.

## Patentansprüche

1. Transportwelle (10) für eine Falzmaschine, mit einem Wellenkörper (12) aus Kohlenstofffaserkunststoff, der einen ringförmigen Querschnitt aufweist, und mehreren auf dem Wellenkörper (12) drehfest angebrachten Transportelementen (14, 16) mit ringförmigem Querschnitt, **dadurch gekennzeichnet, dass** die Transportelemente von mehreren Transportrollen (14,16) gebildet werden, die im Abstand zueinander auf dem Wellenkörper (12) angebracht sind, wobei
- die Transportrollen (14, 16) einen ringförmigen Rollenkörper (26) aufweisen, in dessen einer Stirnseite eine zylindrische Innenausnehmung (28) ausgebildet ist,
- in die zylindrische Innenausnehmung (28) ein durch einen Klemmspalt (38) unterbrochener Klemmring (36) eingesetzt ist, der axial mit dem Rollenkörper (26) verbunden (44, 46) ist, und
- der Klemmring (36) auf dem Wellenkörper (12) mit Klemmsitz befestigt ist.

2. Transportwelle nach Anspruch 1, **dadurch gekennzeichnet, dass**
- zwischen benachbarten Transportrollen (14, 16) Messeraufnahmen (18) mit ringförmigen Querschnitt drehfest auf dem Wellenkörper (12) angebracht sind,
- die Messeraufnahmen (18) einen ringförmigen Rollenkörper (26) aufweisen, in dessen einer Stirnseite eine zylindrische Innenausnehmung (28) ausgebildet ist,
- in die zylindrische Innenausnehmung (28) ein durch einen Klemmspalt (38) unterbrochener Klemmring (36) eingesetzt ist, der axial mit dem Rollenkörper (26) verbunden ist, und
- der Klemmring (36) auf dem Wellenkörper (12) mit Klemmsitz befestigt ist.

## Claims

1. A transport shaft (10) for a folding machine comprising a shaft body (12) made of carbon fibre plastics and having an annular cross section, and a plurality of transport elements (14, 16) fixed on the shaft body (12) for rotation therewith and having annular cross sections, **characterised in that** the transport elements are constituted by a plurality of transport rollers (14, 16) mounted at a distance from each other on the shaft body (12), wherein
- the transport rollers (14, 16) have an annular roller body (26), in an end side of which a cylindrical inner recess (28) is formed,
- a clamping ring (36) interrupted by a clamping gap (38) is inserted in the cylindrical inner recess (28), which clamping ring (36) is axially connected (44, 46) to the roller body (26), and
- the clamping ring (36) is press-fitted on the shaft body (12).

2. The transport shaft according to claim 1, **characterised in that**
- blade receiving means (18) having annular cross sections are fixed between adjacent transport rollers (14, 16) on the shaft body (12) for rotation therewith,
- the blade receiving means (18) have an annular roller body (26), in an end side of which a cylindrical inner recess (28) is formed,
- a clamping ring (36) interrupted by a clamping gap (38) is inserted in the cylindrical inner recess (28), which clamping ring (36) is axially connected to the roller body (26), and
- the clamping ring (36) is press-fitted on the shaft body (12).

## Revendications

1. Arbre de transport (10) pour une plieuse, comprenant un corps d'arbre (12) à base de plastique à fibre de carbone, qui présente une section de forme annulaire, et plusieurs éléments de transport (14, 16) placés de façon solidaire en rotation sur le corps d'arbre (12) avec une section annulaire, **caractérisé en ce que** les éléments de transport sont formés par plusieurs galets de transport (14, 16) qui sont placés à distance les uns des autres sur le corps d'arbre (12),
- les galets de transport (14, 16) présentant un corps de galet (26) de forme annulaire, dans une face avant duquel est réalisé un évidement intérieur (28) cylindrique,
- une bague de serrage (36) interrompue par une fente de serrage (38) étant insérée dans l'évidement intérieur (28) cylindrique, laquelle bague est reliée (44, 46) axialement au corps de galet (26), et
- la bague de serrage (36) étant fixée sur le corps d'arbre (12) par ajustement de serrage.

2. Arbre de transport selon la revendication 1, **caractérisé en ce que**
- des logements de couteaux (18) avec une section annulaire sont placés de façon solidaire en rotation sur le corps d'arbre (12) entre des galets de transport (14, 16) voisins,
- les logements de couteaux (18) présentent un corps de galet (26) annulaire, dans une face avant duquel est réalisé un évidement intérieur (28) cylindrique,
- une bague de serrage (36) interrompue par une fente de serrage (38) est insérée dans l'évidement (28) cylindrique, laquelle bague est reliée axialement au corps de galet (26), et
- la bague de serrage (36) est fixée sur le corps d'arbre (12) par ajustement de serrage.
